# EUROPÄISCHE PATENTSCHRIFT

(11) **EP 3 249 442 B1**
(45) Veröffentlichungstag und Bekanntmachung des Hinweises auf die Patenterteilung: **18.04.2018**
(21) Anmeldenummer: 16171035.5
(22) Anmeldetag: 24.05.2016
(51) Int. Cl.: G02B 26/08, G02B 26/10, G07G 1/00

(54) **STRAHLABLENKUNGSELEMENT**
BEAM DEFLECTION ELEMENT
ÉLEMENT DE DEVIATION DE RAYONS

(43) Veröffentlichungstag der Anmeldung: 29.11.2017
(73) Patentinhaber: SICK AG, 79183 Waldkirch/Breisgau (DE)
(72) Erfinder: Blöhbaum, Frank, 79312 Emmendingen (DE)
(74) Vertreter: Manitz Finsterwald Patentanwälte PartmbB

(56) Entgegenhaltungen:
- EP-A2- 1 365 279
- WO-A1-01/79821
- WO-A1-2007/082952
- WO-A2-2007/090843
- DE-A1- 2 456 560

## Beschreibung

Die vorliegende Erfindung betrifft ein Strahlablenkungselement zum Ablenken einfallender elektromagnetischer Strahlung.

Strahlablenkungselemente werden in einer Vielzahl von technischen Anwendungen eingesetzt, beispielsweise in der Sensorik, der Laserbeschriftung, der Sicherheitstechnik, der militärtechnischen Objektverfolgung, der Medizintechnik, der optischen Inspektion, der Laser-Radar-Technik, der scannenden Mikroskopie oder der Barcode-Erkennung. Zur systematischen Abtastung eines Objekts ausgelegte Strahlablenkungselemente werden oftmals als "Scanner" bezeichnet.

Eine veränderliche Strahlablenkung kann auf mechanischem Wege erfolgen, z. B. mittels eines rotierenden oder schwingenden Spiegels, Prismas oder dergleichen. Auch ein Mikrospiegel-Array kann zur Strahlablenkung in Scanner-Einheiten verwendet werden. Ferner sind so genannte mikrooptische Scanner bekannt, bei welchen die Strahlablenkung durch eine quer zur Abstrahlungsrichtung verschiebbare Mikrolinse bewirkt wird.

Bei den genannten Verfahren ist die maximal erzielbare Scan-Frequenz meist relativ gering, beispielsweise 100 kHz. Außerdem ist der Platzbedarf vergleichsweise hoch. Außerdem sind die Möglichkeiten zur Strahlablenkung aufgrund des fest vorgegebenen mechanischen Designs oftmals begrenzt.

Eine veränderliche Strahlablenkung kann auch unter Verwendung eines Beugungsgitters erfolgen, dessen Gitterkonstante durch Streckung oder Stauchung des Trägers variierbar ist. Derartige Strahlablenkungselemente sind in der EP 1 365 279 A2, der DE 24 56 560 A1, der WO 2007/090843 A2 und der WO 2007/082952 A1 offenbart.

Es ist eine Aufgabe der Erfindung, ein einfaches, platzsparendes und flexibel verwendbares Strahlablenkungselement bereitzustellen, das mit hohen Scan-Frequenzen betreibbar ist.

Die Lösung der Aufgabe erfolgt durch ein Strahlablenkungselement mit den Merkmalen des Anspruchs 1.

Ein erfindungsgemäßes Strahlablenkungselement umfasst ein Trägerbauteil, eine Beugungsstruktur, die an einer Oberfläche des Trägerbauteils angeordnet ist und dazu ausgebildet ist, einfallende elektromagnetische Strahlung durch Beugung um einen Strahlablenkungswinkel abzulenken, wobei die Beugungsstruktur eine Anordnung von transmittierenden und/oder reflektierenden Strukturelementen umfasst, die sich von der Oberfläche des Trägerbauteils erstrecken, und wobei sich die Dicke, die Querschnittsform und/oder der Brechungsindex der Strukturelemente entlang einer rechtwinklig zu der Oberfläche verlaufenden Normalenrichtung ändert. Ein erfindungsgemäßes Strahlablenkungselement umfasst ein Modulationsmittel und eine an dieses angeschlossene elektronische Steuereinrichtung, wobei das Modulationsmittel dazu ausgebildet ist, in Abhängigkeit von einem, insbesondere periodischen, Steuersignal an dem Trägerbauteil oder an einem mit diesem verbundenen Element eine Festkörperwelle zu erzeugen, um die Strukturelemente gegeneinander zu verschieben und so den Strahlablenkungswinkel zu verändern.

Das Modulationsmittel ist dazu ausgebildet, die Strukturelemente bezüglich der Normalenrichtung gegeneinander zu verschieben, bevorzugt ausschließlich bezüglich der Normalenrichtung. Bei einer Verschiebung bezüglich der Normalenrichtung ändert sich die Höhenlage unterschiedlich brechender Bereiche der Strukturelemente relativ zueinander, woraus unter anderem eine Änderung des wirksamen Brechungsindex der Beugungsstruktur resultiert. Im Falle einer eindimensionalen Beugungsstruktur erstrecken sich die einzelnen Strukturelemente entlang der Oberfläche.

Bei der Festkörperwelle kann es sich zum Beispiel um eine, insbesondere transversale, Oberflächenwelle handeln.

Die Strahlablenkung erfolgt also durch Beugung. Eine Beugungsstruktur wie z. B. ein Beugungsgitter lenkt monochromatische Strahlung in wenige festgelegte Richtungen ab. Die entsprechenden Ablenkungswinkel hängen von verschiedenen Parametern ab, unter anderem von einer gegebenenfalls vorhandenen Brechzahlmodulation der Beugungsstruktur. Erfindungsgemäß wurde erkannt, dass die Parameter - und damit der Strahlablenkungswinkel - durch gegenseitiges Verschieben der Strukturelemente gezielt veränderbar sind, sofern die Strukturelemente jeweils entlang ihrer Erstreckungsrichtung eine brechzahlbezogene Strukturierung aufweisen. Die brechzahlbezogene Strukturierung kann durch eine Dickenänderung, eine Formänderung oder eine Materialänderung gegeben sein.

Die Erfindung sieht vor, dass sich die Dicke der Strukturelemente entlang der Normalenrichtung kontinuierlich oder stufenweise ändert und/oder dass die Strukturelemente jeweils eine stab- oder leistenförmige Grundform mit wenigstens einer seitlichen Auskragung oder Ausbuchtung, vorzugsweise mehrere bezüglich der Normalenrichtung voneinander beabstandete Auskragungen oder Ausbuchtungen, aufweisen. Dies ermöglicht eine besonders effektive Variation des effektiven Brechungsindex der Beugungsstruktur. Bei einem eindimensionalen Beugungsgitter ist eine Leistenform der Strukturelemente bevorzugt, während bei einer zweidimensionalen Beugungsstruktur eine Stabform der Strukturelemente bevorzugt ist. Je nachdem, welche Positionen die Auskragungen oder Ausbuchungen eines Strukturelements bezüglich der Auskragungen oder Ausbuchtungen des benachbarten Strukturelements einnehmen, ergibt sich ein unterschiedlicher Mischindex.

Im Rahmen der Erfindung wurde insbesondere erkannt, dass durch Erzeugen einer Festkörperwelle an dem Trägerbauteil oder an einem mit diesem verbundenen Element auf besonders einfache Weise eine gegenseitige Verschiebung der Strukturelemente einer Beugungsstruktur und somit eine Veränderung des Ablenkungswinkels bewerkstelligt werden kann. Durch entsprechendes Ansteuern des zum Erzeugen der Festkörperwelle eingesetzten Modulationsmittels kann somit der Strahlablenkungswinkel verändert werden - beispielsweise in periodischer Weise zum kontinuierlichen Überstreichen eines Winkelbereichs. Ein erfindungsgemäßes Strahlablenkungselement kommt ohne mechanisch bewegte Bauteile aus. Insbesondere benötigt ein erfindungsgemäßes Strahlablenkungselement weder Motoreinheiten noch beweglich gelagerte Spiegel und kann somit besonders kompakt aufgebaut sein. Außerdem ist ein Betrieb mit relativ hohen Scan-Frequenzen möglich. Im Gegensatz zu herkömmlichen Strahlablenkungselementen kann ein erfindungsgemäßes Strahlablenkungselement außer einer variablen Strahlablenkung auch eine definierte, insbesondere veränderliche Strahlformung vorsehen - in ähnlicher Weise wie bei einem diffraktiven optischen Element (DOE). Weiterhin kann durch die Festkörperwelle eine Beeinflussung eines Polarisationsmusters oder dergleichen erfolgen, sodass die Einsatzmöglichkeiten eines erfindungsgemäßen Strahlablenkungselements erweitert sind.

Ferner können die Strukturelemente der Anordnung von Strukturelementen identisch gestaltet sein, um eine besonders einfache Herstellung zu ermöglichen. Bei Bedarf können die Strukturelemente der Anordnung von Strukturelementen jedoch auch in unterschiedlicher Weise brechzahlbezogen strukturiert sein. Außerdem ist es möglich, dass die Beugungsstruktur außer der Anordnung von strukturierten Strukturelementen auch unstrukturierte Strukturelemente umfasst.

Vorzugsweise ist ein erfindungsgemäßes Strahlablenkungselement zum Beispiel durch Auswahl der Größenordnung der relevanten Dimensionen der Strukturelemente oder der Größenordnung ihrer relevanten Abstände zum Ablenken von sichtbarem oder infrarotem Licht oder von Mikrowellenstrahlung ausgebildet.

Weiterbildungen der Erfindung sind auch in den abhängigen Ansprüchen, der Beschreibung sowie den beigefügten Zeichnungen angegeben.

Gemäß einer Ausführungsform der Erfindung sind die Strukturelemente rasterartig über die Oberfläche des Trägerbauteils verteilt angeordnet.

Je nach Anwendung kann vorgesehen sein, dass die Änderung der Dicke, der Querschnittsform und/oder des Brechungsindex entlang der Normalenrichtung für alle Strukturelemente gleich ist oder dass sich die Änderungen der Dicke, der Querschnittsform und/oder des Brechungsindex entlang der Normalenrichtung in wenigstens zwei separaten Zonen der Oberfläche des Trägerbauteils voneinander unterscheiden.

Das Modulationsmittel kann dazu ausgebildet sein, durch Verschieben der Strukturelemente gegeneinander zusätzlich die Strahlform und/oder den Polarisationszustand der einfallenden elektromagnetischen Strahlung zu verändern. Dies eröffnet zusätzliche Anwendungsmöglichkeiten.

Es kann eine auf das Trägerbauteil aufgebrachte Wellenleiterschicht vorgesehen sein, wobei die Beugungsstruktur gemeinsam mit der Wellenleiterschicht eine resonante Gitterwellenleiterstruktur bildet. Resonante Gitterwellenleiterstrukturen beruhen auf einer Verknüpfung eines Wellenleiters, beispielsweise in Form einer planaren hochbrechenden Schicht, mit einer dielektrischen Beugungsstruktur und sind beispielsweise in der WO 01/79821 A1 offenbart. Gitterwellenleiterstrukturen weisen ein ausgeprägtes Resonanzverhalten auf. Bei einer bestimmten Wellenlänge - der Resonanzwellenlänge - wird durch auslöschende Interferenz von Teilstrahlen die transmittierte Strahlung vollständig unterdrückt, während der Reflexionsgrad auf 100% ansteigt. Gemäß einer speziellen Ausgestaltung der Erfindung wird die Festkörperwelle an der Wellenleiterschicht erzeugt.

Vorzugsweise ist das Modulationsmittel dazu ausgebildet, entlang der Oberfläche der Wellenleiterschicht eine, insbesondere transversale, Oberflächenwelle zu erzeugen. Dies kann in einfacher Weise durch Ausüben einer Kraft auf die Wellenleiterschicht erfolgen. Zum Erzeugen einer mechanischen Oberflächenwelle ist nur eine relativ geringe Leistung erforderlich.

Bevorzugt sind die Strukturelemente durch Bearbeitung eines Halbleitersubstrats, insbesondere mittels Lithografie oder Ätzen, gebildet. Derartige Bearbeitungsmethoden sind ausgereift und gut beherrscht. Erfindungsgemäß ist es somit möglich, eine Scanner-Einheit in einen Halbleiterchip zu integrieren.

Eine Ausgestaltung der Erfindung sieht vor, dass das Modulationsmittel wenigstens ein Piezoelement aufweist, das mit dem Trägerbauteil oder mit einem an diesem angebrachten Element in mechanischer Verbindung steht, wobei das wenigstens eine Piezoelement und die Strukturelemente vorzugsweise in ein gemeinsames Halbleitersubstrat integriert sind. Piezoelemente eignen sich insbesondere zur Erzeugung von Oberflächenwellen, sind relativ kostengünstig und in miniaturisierter Form erhältlich. Insbesondere kann das wenigstens eine Piezoelement das Trägerbauteil und/oder das mit diesem verbundene Element ausschließlich an einem Randbereich kontaktieren. Somit wird eine übermäßige Erwärmung des Trägerbauteils vermieden. Gemäß einer speziellen Ausgestaltung der Erfindung sind Piezoelemente mit fingerartigen Elektrodenstrukturen, sogenannte Interdigitaltransducer, als Modulationsmittel vorgesehen.

Alternativ oder zusätzlich zu einem Piezoelement kann das Modulationsmittel wenigstens einen elektrostatischen oder elektrodynamischen Aktor aufweisen, der mit dem Trägerbauteil oder mit einem an diesem angebrachten Element, beispielsweise einer Wellenleiterschicht, in mechanischer Verbindung steht.

Die elektronische Steuereinrichtung kann dazu ausgebildet sein, das Erzeugen der Festkörperwelle mit einer konstanten oder veränderlichen Wiederholfrequenz zu unterbrechen oder zu verändern. Das heißt, das Modulationsmittel kann dazu ausgebildet sein, die Festkörperwelle lediglich zeitweise zu erzeugen. Alternativ können abwechselnd unterschiedliche Festkörperwellen erzeugt werden.

Eine spezielle Ausgestaltung der Erfindung sieht vor, dass das Modulationsmittel dazu ausgebildet ist, zum Erzeugen der Festkörperwelle durch eine fortlaufende periodische, insbesondere sinusförmige, Anregung eine erzwungene Schwingung des Trägerbauteils und/oder eines mit diesem verbundenen Elements hervorzurufen. Alternativ kann das Modulationsmittel dazu ausgebildet sein, zum Erzeugen der Festkörperwelle durch einen Anregungsimpuls eine freie Schwingung des Trägerbauteils und/oder eines mit diesem verbundenen Elements, insbesondere in Eigenresonanz, hervorzurufen.

Beispielsweise können pyramidenförmige, abgestuft zylinderförmige oder kugelförmige Strukturelemente vorgesehen sein.

Bevorzugt ist die Dicke der Strukturelemente periodisch strukturiert. Grundsätzlich kann die Dicke der Strukturelemente auf eine beliebige Weise periodisch strukturiert sein.

Vorzugsweise ist die Variation der Dicke der Strukturelemente und/oder die Perlode einer Strukturierung der Dicke der Strukturelemente kleiner als die Wellenlänge der abzulenkenden elektromagnetischen Wellen. Insbesondere können die Strukturelemente als sogenannte Nanostrukturelemente ausgeführt sein.

Vorzugsweise ist das Modulationsmittel dazu ausgebildet, den Strahlablenkungswinkel mit einer Modulationsfrequenz von wenigstens 50 MHz, bevorzugt von wenigstens 100 MHz und besonders bevorzugt von wenigstens 1 GHz, zu verändern. Derartige maximale Scan-Frequenzen werden von herkömmlichen Scannern im Allgemeinen nicht erreicht.

Die Erfindung betrifft auch einen optoelektronischen Sensor, insbesondere einen Laserscanner, mit einem Strahlungssender, vorzugsweise einer Laserlichtquelle, zum Aussenden elektromagnetischer Strahlung und einem Strahlablenkungselement zum Ablenken der ausgesendeten elektromagnetischen Strahlung. Erfindungsgemäß ist das Strahlablenkungselement wie vorstehend beschrieben ausgebildet.

Ist außerdem ein Empfänger zur Detektion von aus einem Überwachungsraum zurückreflektierter Strahlung vorhanden, kann der so gebildete Laserscanner zum Beispiel wirksam zur Überwachung eines Überwachungsraumes eingesetzt werden, wobei der Überwachungsraum mit der elektromagnetischen, mit dem erfindungsgemäßen Strahlablenkungselement abgelenkten Strahlung abgescannt wird und gegebenenfalls an einem Objekt zurückreflektierte Strahlung in an sich für Laserscanner bekannter Art und Weise detektiert und ausgewertet wird.

Die Erfindung wird nachfolgend beispielhaft unter Bezugnahme auf die beigefügten Figuren beschrieben.
- Fig. 1: ist eine Prinzipdarstellung eines erfindungsgemäßen optoelektronischen Sensors, welcher einen Strahlungssender und ein diesem zugeordnetes erfindungsgemäßes Strahlablenkungselement umfasst.
- Fig. 2: ist eine vergrößerte seitliche Schnittdarstellung des Strahlablenkungselements gemäß Fig. 1, welches sich in einem nicht angeregten Grundzustand befindet.
- Fig. 3: zeigt das Strahlablenkungselement gemäß Fig. 2 in einem Anregungszustand.

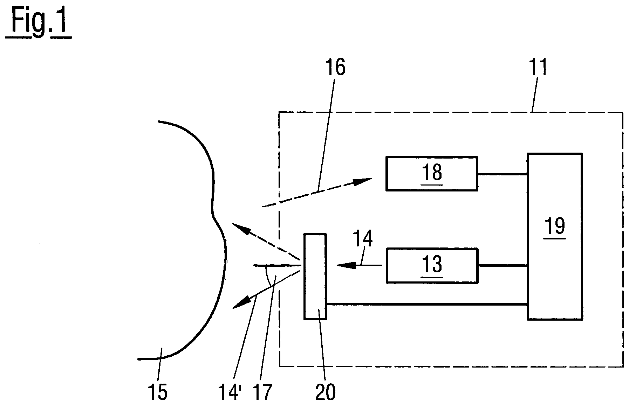

Der in Fig. 1 lediglich schematisch dargestellte optoelektronische Sensor 11 umfasst einen Strahlungssender 13, welcher Sendestrahlen 14 aussendet. Beispielsweise kann es sich bei dem Strahlungssender 13 um einen Laser handeln, welcher monochromatisches Licht im sichtbaren Bereich oder im Infrarotbereich aussendet. Grundsätzlich könnte der Strahlungssender 13 auch zum Aussenden von Mikrowellen ausgebildet sein. Die Sendestrahlen 14 treffen auf ein dem Strahlungssender 13 zugeordnetes Strahlablenkungselement 20 und werden durch dieses um einen Strahlablenkungswinkel 17 abgelenkt.

Ein in der Umgebung des optoelektronischen Sensors 11 befindliches Objekt 15 bewirkt eine Reflexion und/oder Rückstreuung der abgelenkten Sendestrahlen 14', welche dann als Empfangsstrahlen 16 auf einen Strahlungsempfänger 18 des optoelektronischen Sensors 11 auftreffen. Zum Ansteuern des Strahlungssenders 13 und des Strahlungsempfängers 18 sowie zur Auswertung der Empfangssignale umfasst der optoelektronische Sensor 11 eine elektronische Steuereinrichtung 19. Der optoelektronische Sensor 11 kann als Sicherheits-Scanner, Barcode-Leser oder dergleichen ausgeführt sein.

In Abhängigkeit von Steuersignalen der elektronischen Steuereinrichtung 19 bewirkt das Strahlablenkungselement 20 während des Sensorbetriebs eine zeitliche Modulation des Strahlablenkungswinkels 17. Insbesondere kann eine periodische Modulation mit einer vorgegebenen Scan-Frequenz zwischen zwei Maximalwinkeln vorgesehen sein, wie dies in Fig. 1 durch den durchgezogenen Pfeil und den hierzu symmetrischen gestrichelten Pfeil neben dem Strahlablenkungselement 20 gezeigt ist.

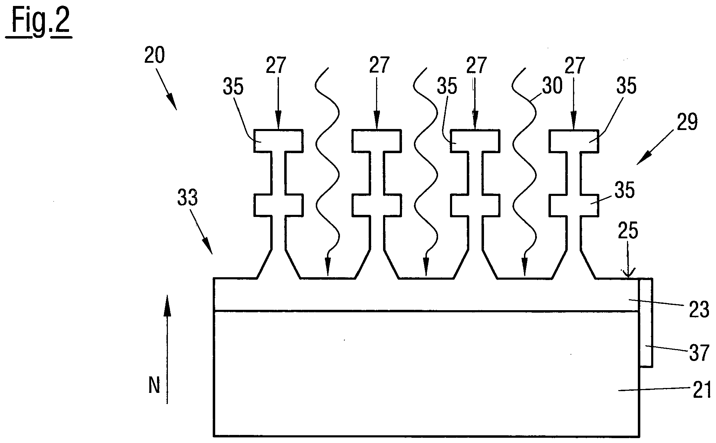

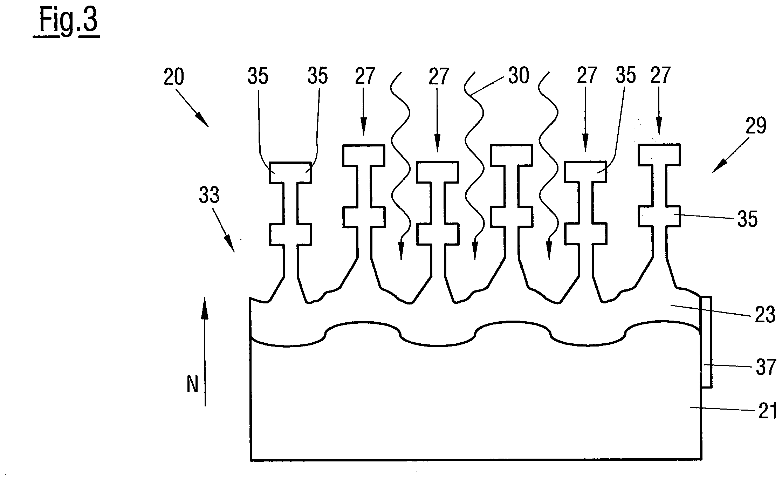

Das in Fig. 2 und 3 detailliert dargestellte Strahlablenkungselement 20 umfasst ein Trägerbauteil 21, vorzugsweise in Form eines Halbleiter-Substrats, auf welches eine Wellenleiterschicht 23 aufgebracht ist. Sowohl das Trägerbauteil 21 als auch die Wellenleiterschicht 23 sind hier aus einem bezüglich der einfallenden Strahlung transparenten und brechenden Material gebildet. Die Wellenleiterschicht 23 weist hierbei einen höheren Brechungsindex auf als das Trägerbauteil 21. Von der vom Trägerbauteil 21 weg weisenden Oberfläche 25 der Wellenleiterschicht 23 erstrecken sich mehrere Strukturelemente 27 in einer rechtwinklig zu der Oberfläche 25 verlaufenden Normalenrichtung N. Die Anordnung aus Strukturelementen 27 bildet insgesamt eine Beugungsstruktur 29. Bei dem dargestellten Ausführungsbeispiel sind die Strukturelemente 27 aus dem gleichen Material wie die Wellenleiterschicht 23 gefertigt und weisen somit den gleichen Brechungsindex wie diese auf. Die Strukturelemente 27 sind in gleichem Abstand voneinander angeordnet und hinsichtlich der Formgebung identisch gestaltet, wobei dies jedoch nicht zwingend ist. Die Oberfläche 25 der Wellenleiterschicht 23 bildet die Einfallsfläche für die zu modulierende elektromagnetische Strahlung 30. Die Strukturelemente 27 können durch Bearbeitung eines Halbleitersubstrats, beispielsweise mittels Lithografie oder Ätzen, gebildet sein.

Das Trägerbauteil 21, die Wellenleiterschicht 23 sowie die Beugungsstruktur 29 bilden gemeinsam eine Gitterwellenleiterstruktur 33. Wie dargestellt weisen die Strukturelemente 27 eine leistenförmige Grundform mit mehreren seitlichen Auskragungen 35 auf. Die Längsrichtung der sich von der Oberfläche 25 weg erstreckenden leistenförmigen Strukturelemente ist senkrecht zu Figurenebene. Bei der gezeigten Ausführungsform weist jedes Strukturelement 27 zwei bezüglich der Normalenrichtung N voneinander beabstandete seitliche Auskragungen 35 auf. Je nach Anwendung können auch Strukturelemente 27 mit lediglich einer seitlichen

Auskragung 35 oder mehr als zwei voneinander beabstandeten seitlichen Auskragungen 35 vorgesehen sein. Weiterhin könnten die seitlichen Auskragungen 35 auch abgerundet sein oder die Strukturelemente 27 könnten auf eine andere Art bezüglich der Normalenrichtung N periodisch strukturiert sein. Die Anzahl, die Position und die Größe der seitlichen Auskragungen 35 haben einen Einfluss auf das Beugungsverhalten der Beugungsstruktur 29.

Eine in Fig. 2 und 3 lediglich schematisch gezeigte Anordnung von Piezoelementen 37 dient dazu, an der Anordnung aus dem Trägerbauteil 21, der Wellenleiterschicht 23 und den Strukturelementen 27 eine transversale Oberflächenwelle zu erzeugen, wie dies in Fig. 3 gezeigt ist. Grundsätzlich könnte auch eine longitudinale Oberflächenwelle oder eine beliebige andere mechanische Festkörperwelle an der Anordnung aus dem Trägerbauteil 21, der Wellenleiterschicht 23 und den Strukturelementen 27 erzeugt werden. Je nach Anwendung kann die Anordnung von Piezoelementen 37 entweder dazu ausgebildet sein, durch eine fortlaufende periodische Anregung eine erzwungene Schwingung des Trägerbauteils 21 hervorzurufen oder aber durch einen Anregungsimpuls eine freie Schwingung des Trägerbauteils 21 in Eigenresonanz hervorzurufen.

Wie in Fig. 3 erkennbar werden die Strukturelemente 27 durch die transversale Oberflächenwelle bezüglich der Normalenrichtung N gegeneinander verschoben. Durch diese Verschiebung ändert sich auch das Beugungsverhalten der Beugungsstruktur 29 und somit der durch diese bewirkte Strahlablenkungswinkel 17 (Fig. 1). Es hat sich gezeigt, dass auf diese Weise eine Scanner-Einheit mit einer maximalen Scan-Frequenz von 1 GHz und mehr bereitgestellt werden kann.

Das Verändern des Beugungsverhaltens der Beugungsstruktur 29 mittels der Oberflächenwelle beruht darauf, dass die Strukturelemente 27 entlang der Normalenrichtung N ein unterschiedliches Brechungsverhalten aufweisen. Ein solches variierendes Brechungsverhalten auch auf andere Weise als durch die seitlichen Auskragungen 35 erzielbar ist. Beispielsweise könnten die Strukturelemente 27 im seitlichen Querschnitt pyramidenförmig oder kugelförmig sein. Auch ist es im Prinzip möglich, bei jedem Strukturelement 27 entlang der Normalenrichtung N Bereiche mit unterschiedlichem Brechungsindex, also zum Beispiel Bereiche mit unterschiedlich brechendem Material, vorzusehen.

Wie erwähnt weisen die Strukturelemente 27 bei dem dargestellten Ausführungsbeispiel eine leistenförmige Grundform auf. Speziell erstrecken sie sich zumindest im Wesentlichen parallel zueinander auf dem Trägerbauteil 21 und bilden hierdurch ein eindimensionales Beugungsgitter. Fig. 2 und 3 zeigen dementsprechend jeweils einen Schnitt durch die leistenförmigen Strukturelemente 27, wobei sich die Längsachsen der leistenförmigen Strukturelemente 27 jeweils rechtwinklig zur Figurenebene erstrecken. Eine alternative Ausführungsform der Erfindung sieht Strukturelemente mit einer stabförmigen Grundform auf. Diese können insbesondere matrixartig angeordnet sein. Ein Querschnitt durch die Stabachsen einer Reihe solcher matrixartig angeordneter Strukturelemente würde ebenso aussehen wie Fig. 2 und 3.

Gemäß einer nicht dargestellten Ausführungsform der Erfindung wird an der Anordnung aus dem Trägerbauteil 21, der Wellenleiterschicht 23 und den Strukturelementen 27 eine longitudinale Oberflächenwelle anstelle einer transversalen Oberflächenwelle erzeugt. Dies kann durch eine geeignete Positionierung und Ausgestaltung der Anordnung von Piezoelementen 37 bewerkstelligt werden. In diesem Fall werden die Strukturelemente 27 quer zu der Normalenrichtung N gegeneinander verschoben, wodurch sich ebenfalls der wirksame Brechungsindex der Gitterwellenleiterstruktur 33 ändert.

Ein erfindungsgemäßer optoelektronischer Sensor 11 zeichnet sich außer durch eine hohe Scan-Frequenz durch eine besonders kompakte Bauweise aus. Es versteht sich, dass ein Strahlablenkungselement 20 wie in Fig. 2 und 3 gezeigt für beliebige Anwendungen geeignet ist, bei welchen es auf eine definierte, insbesondere zeitlich modulierte Strahlablenkung ankommt.

Zusätzlich zu der Strahlablenkung kann das Strahlablenkungselement 20 eine Strahlformung bewirken. Weiterhin können auch komplexere Ablenkungsvarianten als das Überstreichen eines Winkelbereichs realisiert werden. Beispielsweise ist mittels eines wie in Fig. 2 und 3 gezeigten Strahlablenkungselements 20 eine nichtlineare Ablenkung, z. B. eine Erzeugung von Lissajous-Figuren, problemlos möglich.

Das in Fig. 1 gezeigte Strahlablenkungselement 20 arbeitet in Transmission. Grundsätzlich könnte ein Strahlablenkungselement 20 auch in Reflexion arbeiten, wobei die Anordnung des Strahlungssenders 13 relativ zum Strahlablenkungselement 20 entsprechend zu modifizieren wäre und das Trägerbauteil nicht transparent zu sein braucht.

Eine nicht dargestellte Ausführungsform der Erfindung sieht vor, dass dem Strahlungssender eines optoelektronischen Sensors mehrere Strahlablenkungselemente 20 wie vorstehend beschrieben zugeordnet sind, welche hintereinander angeordnet sind. Hierdurch können durch aufeinanderfolgende Ablenkungen besonders große Strahlablenkungswinkel erzielt werden. Außerdem können einige oder alle hintereinander angeordneten Strahlablenkungselemente 20 durch diffraktive Strahlformung ein Muster aus mehreren Strahlen erzeugen, wobei bei Bedarf jedem der mehreren Strahlen ein eigenes nachgeschaltetes Strahlablenkungselement 20 zugeordnet sein kann. Auf diese Weise kann eine effektive Strahlvervielfältigung erzielt werden.

### Bezugszeichenliste

- 11: optoelektronischer Sensor
- 13: Strahlungssender
- 14, 14': Sendestrahlen
- 15: Objekt
- 16: Empfangsstrahlen
- 17: Strahlablenkungswinkel
- 18: Strahlungsempfänger
- 19: elektronische Steuereinrichtung
- 20: Strahlablenkungselement
- 21: Trägerbauteil
- 23: Wellenleiterschicht
- 25: Oberfläche
- 27: Strukturelement
- 29: Beugungsstruktur
- 30: elektromagnetische Strahlung
- 33: Gitterwellenleiterstruktur
- 35: seitliche Auskragung
- 37: Piezoelement

- N: Normalenrichtung

## Patentansprüche

1. Strahlablenkungselement (20) zum Ablenken elektromagnetischer Strahlung (14), umfassend:
ein Trägerbauteil (21),
eine Beugungsstruktur (29), die an einer Oberfläche (25) des Trägerbauteils (21) angeordnet ist und dazu ausgebildet ist, einfallende elektromagnetische Strahlung (14) durch Beugung um einen Strahlablenkungswinkel (17) abzulenken,
wobei die Beugungsstruktur (29) eine Anordnung von transmittierenden und/oder reflektierenden Strukturelementen (27) umfasst, die sich von der Oberfläche (25) des Trägerbauteils (21) erstrecken, wobei sich die Dicke, die Querschnittsform und/oder der Brechungsindex der Strukturelemente (27) entlang einer rechtwinklig zu der Oberfläche (25) verlaufenden Normalenrichtung (N) ändert, wobei
das Strahlablenkungselement (20) ein Modulationsmittel (37) sowie eine an dieses angeschlossene elektronische Steuereinrichtung (19) umfasst, wobei das Modulationsmittel (37) dazu ausgebildet ist, in Abhängigkeit von einem, insbesondere periodischen, Steuersignal an dem Trägerbauteil (21) oder an einem mit diesem verbundenen Element (23) eine Festkörperwelle zu erzeugen, um die Strukturelemente (27) gegeneinander zu verschieben und so den Strahlablenkungswinkel (17) zu verändern,
und wobei das Modulationsmittel (37) dazu ausgebildet ist, die Strukturelemente (27) bezüglich der Normalenrichtung (N) gegeneinander zu verschieben,
**dadurch gekennzeichnet, dass**
sich die Dicke der Strukturelemente (27) entlang der Normalenrichtung (N) kontinuierlich oder stufenweise ändert und/oder dass die Strukturelemente (27) jeweils eine stab- oder leistenförmige Grundform mit wenigstens einer seitlichen Auskragung (35) oder Ausbuchtung aufweisen.

2. Strahlablenkungselement nach Anspruch 1,
**dadurch gekennzeichnet, dass**
die Strukturelemente (27) rasterartig über die Oberfläche des Trägerbauteils (21) verteilt angeordnet sind.

3. Strahlablenkungselement nach Anspruch 1 oder 2,
**dadurch gekennzeichnet, dass**
die Änderung der Dicke, der Querschnittsform und/oder des Brechungsindex entlang der Normalenrichtung (N) für alle Strukturelemente (27) gleich ist oder dass
sich die Änderungen der Dicke, der Querschnittsform und/oder des Brechungsindex entlang der Normalenrichtung (N) in wenigstens zwei separaten Zonen der Oberfläche des Trägerbauteils (21) voneinander unterscheiden.

4. Strahlablenkungselement nach einem der vorstehenden Ansprüche,
**dadurch gekennzeichnet, dass**
das Modulationsmittel (37) dazu ausgebildet ist, durch Verschieben der Strukturelemente (27) gegeneinander zusätzlich die Strahlform und/oder den Polarisationszustand der einfallenden elektromagnetischen Strahlung (14) zu verändern.

5. Strahlablenkungselement nach einem der vorstehenden Ansprüche,
**gekennzeichnet durch**
eine auf das Trägerbauteil (21) aufgebrachte Wellenleiterschicht (23), wobei die Beugungsstruktur (29) gemeinsam mit der Wellenleiterschicht (23) eine resonante Gitterwellenleiterstruktur (33) bildet.

6. Strahlablenkungselement nach einem der vorstehenden Ansprüche,
**dadurch gekennzeichnet, dass**
das Modulationsmittel wenigstens ein Piezoelement (37) aufweist, das mit dem Trägerbauteil (21) oder mit einem an diesem angebrachten Element (23) in mechanischer Verbindung steht, wobei das wenigstens eine Piezoelement (37) und die Strukturelemente (27) vorzugsweise in ein gemeinsames Halbleitersubstrat integriert sind.

7. Strahlablenkungselement nach einem der vorstehenden Ansprüche,
**dadurch gekennzeichnet, dass**
das Modulationsmittel (37) wenigstens einen elektrostatischen oder elektrodynamischen Aktor aufweist, der mit dem Trägerbauteil (21) oder mit einem an diesem angebrachten Element (23) in mechanischer Verbindung steht.

8. Strahlablenkungselement nach einem der vorstehenden Ansprüche,
**dadurch gekennzeichnet, dass**
die elektronische Steuereinrichtung (19) dazu ausgebildet ist, das Erzeugen der Festkörperwelle mit einer konstanten oder veränderlichen Wiederholfrequenz zu unterbrechen oder zu verändern.

9. Strahlablenkungselement nach einem der vorstehenden Ansprüche,
**dadurch gekennzeichnet, dass**
das Modulationsmittel (37) dazu ausgebildet ist, zum Erzeugen der Festkörperwelle durch eine fortlaufende periodische Anregung eine erzwungene Schwingung des Trägerbauteils (21) oder eines mit diesem verbundenen Elements (23) hervorzurufen oder dass
das Modulationsmittel (37) dazu ausgebildet ist, zum Erzeugen der Festkörperwelle durch einen Anregungsimpuls eine freie Schwingung des Trägerbauteils (21) oder eines mit diesem verbundenen Elements (23) hervorzurufen.

10. Strahlablenkungselement nach einem der vorstehenden Ansprüche,
**dadurch gekennzeichnet, dass**
die Strukturelemente (27) jeweils eine stab- oder leistenförmige Grundform mit mehreren bezüglich der Normalenrichtung (N) voneinander beabstandete Auskragungen (35) oder Ausbuchtungen aufweisen.

11. Strahlablenkungselement nach einem der vorstehenden Ansprüche,
**dadurch gekennzeichnet, dass**
die Dicke der Strukturelemente (27) periodisch strukturiert ist.

12. Optoelektronischer Sensor (11) mit einem Strahlungssender (13), vorzugsweise einer Laserlichtquelle, zum Aussenden elektromagnetischer Strahlung (14) und einem Strahlablenkungselement (20) zum Ablenken der ausgesendeten elektromagnetischen Strahlung (14),
**dadurch gekennzeichnet, dass**
das Strahlablenkungselement (20) gemäß einem der vorstehenden Ansprüche ausgebildet ist.

## Claims

1. A beam deflection element (20) for deflecting electromagnetic radiation (14), comprising:
a carrier component (21); and
a diffraction structure (29) which is arranged at a surface (25) of the carrier component (21) and which is configured to deflect incident electromagnetic radiation (14) by diffraction by a beam deflection angle (17),
wherein the diffraction structure (29) comprises an arrangement of transmitting and/or reflective structural elements (27) which extend from the surface (25) of the carrier component (21); wherein
the thickness, the cross-sectional shape and/or the refractive index of the structural elements (27) vary along a normal direction (N) extending at a right angle to the surface (25); wherein
the beam deflection element (20) comprises a modulation means (37) as well as an electronic control device (19) connected thereto, with the modulation means (37) being configured to generate a solid state wave at the carrier component (21) or at an element (23) connected thereto in dependence on a control signal, in particular a periodic control signal, in order to displace the structural elements (27) with respect to one another and to change the beam deflection angle (17) in this manner;
and wherein the modulation means (37) is configured to displace the structural elements (27) with respect to one another with regard to the normal direction (N),
**characterized in that**
the thickness of the structural elements (27) varies continuously or stepwise along the normal direction (N); and/or **in that** the structural elements (27) each have a bar-shaped or strip-shaped base shape having at least one lateral projection (35) or recess.

2. A beam deflection element in accordance with claim 1,
**characterized in that**
the structural elements (27) are arranged distributed in a grid-like manner over the surface of the carrier component (21).

3. A beam deflection element in accordance with claim 1 or claim 2,
**characterized in that**
the variation of the thickness, of the cross-sectional shape and/or of the refractive index along the normal direction (N) is the same for all of the structural elements (27); or **in that**
the variations of the thickness, of the cross-sectional shape and/or of the refractive index along the normal direction (N) differ from one another in at least two separate zones of the surface of the carrier component (21).

4. A beam deflection element in accordance with any one of the preceding claims,
**characterized in that**
the modulation means (37) is configured to additionally change the beam shape and/or the polarization state of the incident electromagnetic radiation (14) by displacing the structural elements (27) with respect to one another.

5. A beam deflection element in accordance with any one of the preceding claims,
**characterized by**
a waveguide layer (23) applied to the carrier component (21), with the diffraction structure (29) forming a resonant lattice waveguide structure (33) together with the waveguide layer (23).

6. A beam deflection element in accordance with any one of the preceding claims,
**characterized in that**
the modulation means has at least one piezo element (37) which is in mechanical connection with the carrier component (21) or with an element (23) attached thereto, with the at least one piezo element (37) and the structural elements (27) preferably being integrated into a common semiconductor substrate.

7. A beam deflection element in accordance with any one of the preceding claims,
**characterized in that**
the modulation means (37) has at least one electrostatic or electrodynamic actuator which is in mechanical connection with the carrier component (21) or with an element (23) attached thereto.

8. A beam deflection element in accordance with any one of the preceding claims,
**characterized in that**
the electronic control device (19) is configured to interrupt or to change the generation of the solid state wave at a constant or variable repetition frequency.

9. A beam deflection element in accordance with any one of the preceding claims,
**characterized in that**
the modulation means (37) is configured to bring about an enforced oscillation of the carrier component (21) or of an element (23) connected thereto by a consecutive periodic excitation in order to generate the solid state wave; or **in that**
the modulation means (37) is configured to bring about a free oscillation of the carrier component (21) or of an element (23) connected thereto by an excitation pulse in order to generate the solid state wave.

10. A beam deflection element in accordance with any one of the preceding claims,
**characterized in that**
the structural elements (27) each have a bar-shaped or strip-shaped base shape having a plurality of projections (35) or recesses spaced apart from one another with respect to the normal direction (N).

11. A beam deflection element in accordance with any one of the preceding claims,
**characterized in that**
the thickness of the structural elements (27) is periodically structured.

12. An optoelectronic sensor (11) comprising a radiation transmitter (13), preferably a laser light source, for transmitting electromagnetic radiation (14); and a beam deflection element (20) for deflecting the transmitted electromagnetic radiation (14),
**characterized in that**
the beam deflection element (20) is configured in accordance with any one of the preceding claims.

## Revendications

1. Élément de déviation de rayon (20) pour dévier un rayonnement électromagnétique (14), comportant :
un composant porteur (21),
une structure de diffraction (29) qui est agencée sur une surface (25) du composant porteur (21) et qui est réalisée pour dévier un rayonnement électromagnétique incident (14) par diffraction d'un angle de déviation de rayon (17),
dans lequel
la structure de diffraction (29) comprend un agencement d'éléments structurels (27) transmetteurs et/ou réfléchissants qui s'étendent depuis la surface (25) du composant porteur (21), et
l'épaisseur, la forme en section transversale et/ou l'indice de réfraction des éléments structurels (27) se modifient le long d'une direction normale (N) s'étendant à angle droit par rapport à la surface (25),
l'élément de déviation de rayon (20) comprend un moyen de modulation (37) ainsi qu'un dispositif de commande électronique (19) connecté à celui-ci, le moyen de modulation (37) étant réalisé pour générer une onde de corps solides en fonction d'un signal de commande en particulier périodique sur le composant porteur (21) ou sur un élément (23) relié à celui-ci, afin de translater les éléments structurels (27) les uns par rapport aux autres et de modifier ainsi l'angle de déviation de rayon (17), et
le moyen de modulation (37) est réalisé pour translater les éléments structurels (27) les uns par rapport aux autres à l'égard de la direction normale (N),
**caractérisé en ce que**
l'épaisseur des éléments structurels (27) le long de la direction normale (N) se modifie en continu ou graduellement, et/ou **en ce que** les éléments structurels (27) présentent chacun une forme de base en tige ou en barrette avec au moins une saillie latérale (35) ou renfoncement.

2. Élément de déviation de rayon selon la revendication 1,
**caractérisé en ce que**
les éléments structurels (27) sont agencés de façon répartie en trame sur la surface du composant porteur (21).

3. Élément de déviation de rayon selon la revendication 1 ou 2,
**caractérisé en ce que**
la modification de l'épaisseur, de la forme en section transversale et/ou de l'indice de réfraction le long de la direction normale (N) est égale pour tous les éléments structurels (27), ou **en ce que**
les modifications de l'épaisseur, de la forme en section transversale et/ou de l'indice de réfraction le long de la direction normale (N) sont différentes les unes des autres dans au moins deux zones distinctes de la surface du composant porteur (21).

4. Élément de déviation de rayon selon l'une des revendications précédentes,
**caractérisé en ce que**
le moyen de modulation (37) est réalisé pour modifier en supplément la forme du rayon et/ou l'état de polarisation du rayonnement électromagnétique incident (14) par translation des éléments structurels (27) les uns par rapport aux autres.

5. Élément de déviation de rayon selon l'une des revendications précédentes,
**caractérisé par**
une couche de guide d'ondes (23) déposée sur le composant porteur (21), la structure de diffraction (29) formant conjointement avec la couche de guide d'ondes (23) une structure réticulaire de guide d'ondes (33) résonante.

6. Élément de déviation de rayon selon l'une des revendications précédentes,
**caractérisé en ce que**
le moyen de modulation comprend au moins un élément piézoélectrique (37) qui est en liaison mécanique avec le composant porteur (21) ou avec un élément (23) monté sur celui-ci, ledit au moins un élément piézoélectrique (37) et les éléments structurels (27) étant intégrés de préférence dans un substrat semi-conducteur commun.

7. Élément de déviation de rayon selon l'une des revendications précédentes,
**caractérisé en ce que**
le moyen de modulation (37) comprend au moins un actionneur électrostatique ou électrodynamique qui est en liaison mécanique avec le composant porteur (21) ou avec un élément (23) monté sur celui-ci.

8. Élément de déviation de rayon selon l'une des revendications précédentes,
**caractérisé en ce que**
le dispositif de commande électronique (19) est réalisé pour interrompre ou pour modifier la génération d'une onde de corps solides à une fréquence de récurrence constante ou variable.

9. Élément de déviation de rayon selon l'une des revendications précédentes,
**caractérisé en ce que**
le moyen de modulation (37) est réalisé pour provoquer une oscillation forcée du composant porteur (21) ou d'un élément (23) relié à celui-ci par une excitation périodique continue, en vue de générer l'onde de corps solides, ou **en ce que**
le moyen de modulation (37) est réalisé pour provoquer une oscillation libre du composant porteur (21) ou d'un élément (23) relié à celui-ci par une impulsion d'excitation, en vue de générer l'onde de corps solides.

10. Élément de déviation de rayon selon l'une des revendications précédentes,
**caractérisé en ce que**
les éléments structurels (27) présentent chacun une forme de base en tige ou en barrette avec plusieurs saillies (35) ou renfoncements espacées les unes des autres par rapport à la direction normale (N).

11. Élément de déviation de rayon selon l'une des revendications précédentes,
**caractérisé en ce que**
l'épaisseur des éléments structurels (27) est structurée périodiquement.

12. Capteur optoélectronique (11) comportant un émetteur de rayonnement (13), de préférence une source de lumière laser, pour émettre un rayonnement électromagnétique (14), et un élément de déviation de rayon (20) pour dévier le rayonnement électromagnétique émis (14),
**caractérisé en ce que**
l'élément de déviation de rayon (20) est réalisé selon l'une des revendications précédentes.
